# EUROPÄISCHE PATENTSCHRIFT

(11) **EP 1 523 431 B1**
(45) Veröffentlichungstag und Bekanntmachung des Hinweises auf die Patenterteilung: **09.08.2006**
(21) Anmeldenummer: 03740323.5
(22) Anmeldetag: 24.06.2003
(51) Int. Cl.: B60Q 3/02, B60Q 1/26, B60Q 1/14, F21V 14/08

(54) **LEUCHTE FÜR KRAFTFAHRZEUGE**
LIGHTS FOR MOTOR VEHICLES
FEU POUR VEHICULES AUTOMOBILES

(30) Priorität: 24.07.2002 DE 10233719
(43) Veröffentlichungstag der Anmeldung: 20.04.2005
(73) Patentinhaber: Bayerische Motoren Werke Aktiengesellschaft, 80809 München (DE)
(72) Erfinder: ENDERS, Martin, 81545 München (DE)
(86) Internationale Anmeldenummer: PCT/EP2003/006654
(87) Internationale Veröffentlichungsnummer: WO 2004/014694

(56) Entgegenhaltungen:
- DE-A- 2 209 338
- FR-A- 2 590 965
- FR-A- 2 605 086
- US-A1- 2002 186 569

## Beschreibung

Die Erfindung betrifft eine Leuchte, insbesondere für Kraftfahrzeuge, mit mindestens einer Lichtquelle und einer in Abstrahlrichtung vorgelagerten Abdeckung.

Leuchten für Kraftfahrzeuge weisen eine oder mehrere Lichtquellen auf, denen in der Regel optische Mittel zur Erzeugung einer bestimmten Lichtverteilung zugeordnet sind. Meist sind die Lichtquellen in einem Leuchtengehäuse angeordnet, das mit einer Scheibe abgedeckt ist. Die Scheibe kann eine Optik, beispielsweise eine Linse oder eine Streuscheibe sein. In zunehmenden Maße werden als Abdeckung aufgrund von Designvorgaben und aus konstruktiven Gründen auch optiklose glasklare Scheiben eingesetzt. Dabei sind alle optisch aktiven Elemente wie Lampen, Reflektoren und andere lichtablenkende Mittel im Leuchteninneren platziert. Dies hat den Vorteil, dass sich die meist erforderlichen Verstellmöglichkeiten, beispielsweise eine Höhenausrichtung eines abgestrahlten Lichtkegels, einfacher realisieren lassen. Glasklare Abdeckscheiben werden insbesondere bei Frontscheinwerfern, aber auch zunehmend bei Heckleuchten und Innenbeleuchtungen angestrebt.

Andererseits führen die vorgeschriebenen diversen Lichtverteilungen, die moderne Fahrzeugleuchten zur Verfügung stellen müssen, zu einer Vielzahl verschiedener Leuchtenkomponenten, wie Reflektoren oder verschieden großen und verschieden farbigen Lichtquellen und zusätzlichen Kappen und Streuelementen in den Leuchtengehäusen. Um die gewünschten Lichtverteilungen zu realisieren, sind oft unsymmetrische Formen, Beschichtungen oder Blenden notwendig. Dies kann jedoch, insbesondere bei Kombinationsleuchten wie Frontscheinwerferkombinationen, bei denen mehrere Leuchtenelemente in einem Gehäuse untergebracht sind, auch dazu führen, dass der ungehinderte Einblick in das Leuchteninnere als störend für den optischen Gesamteindruck der Leuchte empfunden wird. Weiterhin führt die steigende Zahl von Funktionen, beispielsweise eine zusätzliche Tagfahrlicht - Einstellung, die moderne Fahrzeugleuchten erfüllen müssen, zu immer komplizierteren und kostenaufwendigeren Konstruktionen mit einer zunehmenden Zahl von lichttechnischen Komponenten. Da bei modernen Kombinationsleuchten meist ein begrenzter Bauraum zur Verfügung steht und durch Designvorgaben die äußere Gehäuseform im Wesentlichen vorgegeben ist, ist die Unterbringung zusätzlicher Komponenten problematisch, zudem kommt es zu einer Gewichtserhöhung.

Zur gezielten Schaltung und Verteilung optischer Strahlenbündel sind aus der Elektrotechnik sogenannte elektrische Diffusoren bekannt. Dies sind Bauelemente, bei denen zwischen zwei transparenten Elektroden eine Flüssigkristallschicht angeordnet ist. Durch Anlegen einer elektrischen Spannung, können die ungeordnet verteilten Flüssigkristalle ausgerichtet werden. Während die ungeordnete Flüssigkristallschicht eine auf sie auftreffende optische Strahlung diffus streut, kann die Strahlung ungehindert passieren, wenn die Flüssigkristalle entsprechend ausgerichtet sind. Dadurch wird der Diffusor für die Strahlung transparent. Dieser Effekt wird auf vielfältige Weise in optischen Elementen, wie etwa bei LCD - Anzeigen ausgenutzt.

Vergleichbare optische Elemente werden auch schon in der Fahrzeugtechnik eingesetzt, beispielsweise in einer Anzeigeeinheit zur gezielten Beleuchtung vorgebbarer Bereiche eines Zifferblattes (DE 195 40 813 C1) oder in einer Vorrichtung zur Verwendung als Flächenleuchte und als transparente Verglasung (DE 198 52 593 A1).

Bei der aus der DE 195 40 813 C1 bekannten Anzeigeeinheit ist zwischen dem Ziffernblatt und einer Lichtquelle ein Lichtventil angeordnet, dessen Lichtdurchlässigkeit veränderbar einstellbar ist. In einer bevorzugten Ausführungsform ist das Lichtventil als eine Flüssigkristallfolie ausgebildet, auf der Zeichen und Ziffern durch beidseitig aufgebrachte transparente Elektroden ausgebildet sind. Die Elektrodenpaare sind unabhängig voneinander spannungsbeaufschlagbar. Durch eine Spannungsbeaufschlagung der einzelnen Elektrodenpaare wird die Folie in den entsprechenden Bereichen lichtdurchlässig, so dass dort eine Durchleuchtung in Richtung eines Beobachters auf der dem Ziffernblatt zugewandten Seite erfolgt. In den übrigen Bereichen wird das Licht der Lichtquelle gestreut. Durch eine zusätzliche dunkeltransparente Abdeckscheibe wird das Streulicht zusätzlich absorbiert, so dass die Ziffern nur in den Bereichen sichtbar sind, in denen die Flüssigkristallfolie spannungsbeaufschlagt ist. Zweck ist es, eine Anzeigeeinheit zu schaffen, bei der Zeichen und Symbole auf einfache Weise von einer Normaldarstellung in eine sich optisch davon unterscheidende Darstellungsweise veränderbar sind.

Nachteilig wirkt sich aus, dass das Lichtventil über die einzelnen Elektrodenpaare jeweils nur einzelne Ziffern der Folie bzw. des Ziffernblattes transparent schaltet. Ein derartiges Lichtventil ist für Fahrzeugleuchten nicht geeignet. Der Fachmann erhält hier nur Hinweise, ein Lichtventil in Verbindung mit einer Anzeigeeinheit zu verwenden.

Bei der aus der DE 198 52 593 A1 bekannten Vorrichtung zur Verwendung als Flächenleuchte und als transparente Verglasung ist eine Scheibe auf der der Abstrahlrichtung der Leuchte abgewandten Seite einer Platte angeordnet. An einer Stirnseite der Platte ist eine Lichtquelle angeordnet, die über eine Plattenkante in die Platte einkoppelbar ist. Die Platte weist Streuzentren auf, an denen das eingekoppelte Licht nach allen Seiten gestreut wird. Die Scheibe ist lichtdurchlässig oder spiegelnd reflektierend schaltbar. In dem reflektierenden Zustand wird das von der Platte in Richtung der Scheibe gestreute Licht von der Oberfläche der Scheibe in eine gewünschte Richtung und in einer bevorzugten Ausführungsform in das Innere eines Fahrzeugs, zurückgeworfen, Die Scheibe dient dann in Wirkverbindung mit der Platte und der Lichtquelle als die Flächenleuchte. Bei ausgeschalteter Lichtquelle ist die Scheibe transparent geschaltet und dient dann als Überkopfverglasung in dem Dach des Fahrzeugs.

Nachteilig bei der bekannten Vorrichtung wirkt sich aus, dass die permanenten Streuzentren in der Platte die Lichtdurchlässigkeit einschränken, dadurch ist keine völlige Transparenz möglich. Da die Platte der Abstrahlrichtung vorgelagert ist, während die Scheibe auf der anderen Seite der Platte angeordnet ist, wird aufgrund der Anordnung der Platte der Blick durch die Scheibe beeinträchtigt. Der Grad der Streuung kann an der Platte nicht variiert werden. Dadurch sind die Einstellmöglichkeiten der Beleuchtung eingeschränkt. Die Platte stellt ein zusätzliches kostenaufwendiges Bauteil dar. Weiterhin entsteht ein erhöhter Energieverbrauch, da die Scheibe bei ausgeschalteter Beleuchtung durch permanentes Anlegen einer Spannung auf transparent geschaltet wird.

Dokument FR-A-2605086, das als nächstliegender Stand der Technik betrachtet wird, offenbart eine Kraftfahrzeugleuchte mit einer Lichtquelle und einer vorgelagerten Abdeckung, die einen Diffusor aufweist, bei der die optische Wirkung zwischen opak und transparent wählbar ist.

Dokument DE-A-2209338 offenbart zwar eine Kraftfahrzeugleuchte, die auch als Bremsleuchte oder Blinkleuchte einsetzbar ist und bei der der Diffusor auch in einen Zwischenzustand, zwischen völlig lichtdurchlässig und total abgeschattet, einstellbar ist, allerdings sind die drei Funktionen einer Heckleuchte (ausgeschaltetes Licht, eingeschaltetes Licht und Bremsbetätigung) nicht im Zusammenhang mit den Zuständen des Diffusors definiert.

Aufgabe der vorliegenden Erfindung ist es daher, eine Fahrzeugleuchte zu schaffen, die mit möglichst wenigen lichttechnischen Komponenten eine hohe Funktionsvielfalt aufweist, flexibel einsetzbar ist und einen hochwertigen optischen Eindruck vermittelt.

Diese Aufgabe wird erfindungsgemäß in Verbindung mit dem Oberbegriff des Anspruches 1 dadurch gelöst, dass die Abdeckung zur Erzeugung einer Mehrfachfunktionalität einen in seiner optischen Wirkung veränderbaren, elektrischen Diffusor aufweist

Dadurch, dass die Abdeckung einen elektrischen Diffusor aufweist, kann die Lichtverteilung der die Abdeckung passierenden Strahlung beeinflusst werden. Dadurch ergibt sich die Möglichkeit, über die Abdeckung verschiedene applikationsangepasste Lichtverteilungen zu erzeugen. Dadurch kann die Zahl der lichttechnischen Komponenten reduziert werden, was sich kostengünstig auswirkt. Die Reduzierung der Zahl der Komponenten führt auch zu einer Gewichtsersparnis. Zudem ist eine kompaktere Bauweise durch die Einsparung von Bauraum möglich.

Es können handelsübliche Diffusormodelle oder speziell nach dem an sich bekannten Aufbau angefertigte Modelle verwendet werden. Prinzipiell befindet sich zwischen zwei als ein Elektrodenpaar ausgebildeten transparenten flächigen spannungsbeaufschlagbaren Schichten eine Flüssigkristallschicht. Durch Anlegen einer Spannung kann die Lichttransmission durch den Diffusor gezielt beeinflusst werden. Der Diffusor kann mit der Abdeckung verbunden sein und mit ihr ein einstückiges Bauteil bilden. Es ist aber auch möglich, dass der Diffusor ein separates Bauteil bildet, das der Abdeckung zugeordnet ist.

Gemäß einer bevorzugten Ausführungsform der Erfindung bildet der Diffusor in einem ersten Funktionszustand, in dem er opak geschaltet ist, einen Blickschutz, durch den ein Einblick in Richtung der Lichtquelle verhindert wird.

Der Diffusor bildet in dem ersten Funktionszustand einen Einblickschutz, indem er spannungslos geschaltet ist und als eine Streuscheibe wirkt. Die Lichtstreuung verhindert einen Einblick in das Leuchteninnere. Die Leuchtenkomponenten sind damit, insbesondere bei ausgeschalteter Beleuchtung nicht sichtbar. Dadurch kann das Leuchteninnere, d.h. die lichttechnischen Komponenten, ohne Rücksicht auf ihr Erscheinungsbild für einen Beobachter gestaltet werden, so dass sich ein Designvorteil ergibt.

Nach einer weiteren bevorzugten Ausführungsform der Erfindung ist der Diffusor in einem zweiten Funktionszustand, in dem er bei eingeschalteter Lichtquelle zwischen diffus durchleuchtend und transparent veränderbar einstellbar ist, als eine Vorrichtung zur Erzeugung einer applikationsangepassten Lichtverteilung ausgebildet.

Durch Anlegen der Spannung an die Elektrodenschichten kann der Diffusor transparent geschaltet werden. Durch eine entsprechende Regelung der Spannung kann der Grad der Ausrichtung der Flüssigkristalle in dem Diffusor eingestellt werden. Damit sind auch Zwischenstufen zwischen einer opaken diffusen Abdeckung und einer vollkommen transparenten Abdeckung möglich. Dadurch kann die Lichtverteilung einer jeweiligen Anwendung der Leuchte angepasst werden, sie ist dadurch sehr flexibel einsetzbar.

Durch die Funktion der Abdeckung mit dem Diffusor als veränderbare Optik zwischen Einblickschutz und applikationsangepasster Lichtverteilung wird die Mehrfachfunktionalität erreicht.

Gemäß einer weiteren bevorzugten Ausführungsform der Erfindung bildet ein mit der den Diffusor aufweisenden Abdeckung abgedecktes Leuchtengehäuse mit mindestens einer, in dem Leuchtengehäuse angeordneten lichttechnischen Komponente einen Frontscheinwerfer.

Bei Frontscheinwerfern kann der Diffusor besonders vorteilhaft eingesetzt werden, da hier häufig klare Abdeckscheiben Verwendung finden. Durch Umschalten des Diffusors auf "opak" sind die technischen Details des Scheinwerfers bei ausgeschalteter Beleuchtung nicht sichtbar. Durch die Möglichkeit bei eingeschalteter Beleuchtung bei der Einstellung "transparent" gerichtetes Licht abzustrahlen und bei der Einstellung "diffus" nur gestreutes Licht abzustrahlen, ergibt sich ein Einsparpotenzial an lichttechnischen Komponenten, da für die gerichtete Abstrahlung und die gestreute Abstrahlung keine separaten lichttechnischen Komponenten erforderlich sind.

Nach einer weiteren bevorzugten Ausführungsform der Erfindung ist bei eingeschalteter Beleuchtung die Abstrahlung des Frontscheinwerfers zwischen einem Tagfahrlicht, bei auf diffus durchleuchtend geschaltetem Diffusor und einem Fernlicht, bei auf transparent geschaltetem Diffusor, umschaltbar, und befindet sich bei ausgeschalteter Beleuchtung der Diffusor in seinem ersten Funktionszustand.

Der Einsatz des Diffusors zum Umschalten zwischen Fernlicht (gerichtete Abstrahlung zur Ausleuchtung der Fahrbahn) und Tagfahrlicht (gestreute Abstrahlung zur besseren Erkennbarkeit des Fahrzeugs) ist besonders kostengünstig und gewichtssparend, da auf zusätzliche Komponenten für das Tagfahrlicht verzichtet werden kann. In ausgeschaltetem Zustand ist vorteilhaft der Einblickschutz aktiviert.

Gemäß einer weiteren bevorzugten Ausführungsform der Erfindung bildet das mit der den Diffusor aufweisenden Abdeckung abgedeckte Leuchtengehäuse mit der mindestens einen, in dem Leuchtengehäuse angeordneten lichttechnischen Komponente eine Signalleuchte.

Signalleuchten werden in zunehmendem Maße mit ungefärbten und zumindest in Teilen klaren Abdeckscheiben und farbigen Glühlampen oder anderen eingefärbten Lichtquellen verwirklicht. Hier kann der Diffusor besonders vorteilhaft als Einblickschutz dienen, da eine eingefärbte Glühlampe eher als optisch unvorteilhaft empfunden wird. Durch die in ihrer optischen Wirkungsweise veränderbare Abdeckscheibe, kann die Signalleuchte mit wenigen Bauteilen besonders kostengünstig konstruiert werden.

Nach einer weiteren bevorzugten Ausführungsform der Erfindung ist die Signalleuchte als eine Heckleuchte ausgebildet ist, bei der der Diffusor bei eingeschaltetem Schlusslicht auf diffus durchleuchtend geschaltet ist, und bei der sich der Diffusor bei ausgeschaltetem Schlusslicht in seinem ersten Funktionszustand befindet, und bei der der Diffusor bei einer Bremsbetätigung, bei der ein Bremslicht abgestrahlt wird, auf transparent geschaltet wird.

Die Mehrfachfunktionalität der Abdeckung kommt besonders in der Heckleuchten - Kombination zum Tragen, da hier Schlusslicht und Bremslicht mit einem Einblickschutz in besonders kompakter und kostengünstiger Form verwirklicht werden können. Weiterhin wird durch die diffuse Abstrahlung ein besonders homogenes Schlusslicht und durch die vorzugsweise völlig transparente Abdeckung bei der Bremsbetätigung ein gerichtetes, gebündeltes und damit besonders ostensibles Bremssignal erzeugt.

Gemäß einer weiteren bevorzugten Ausführungsform der Erfindung ist die Signalleuchte als eine Blinkleuchte ausgebildet ist, bei der bei eingeschaltetem Blinksignal der Diffusor auf transparent geschaltet ist, und bei der sich der Diffusor bei ausgeschaltetem Blinksignal in seinem ersten Funktionszustand befindet.

Die meist gelb eingefärbten Glühlampen in Blinkleuchten mit klaren Abdeckscheiben werden durch den Diffusor bei nicht eingeschaltetem Blinksignal uneinsehbar abgedeckt. Insbesondere in Leuchtenkombinationen, in denen die Blinkleuchten häufig als ein integraler Bestandteil enthalten sind, verbessert die Einblickschutzfunktion den optischen Eindruck der Leuchte auf einen Betrachter. Bei eingeschaltetem Blinksignal kann die Abdeckung völlig transparent geschaltet sein, um ein besonders klares Blinksignal abzustrahlen. Diese Abstrahlung wird als optisch vorteilhafter empfunden, im Vergleich zu einer mit herkömmlichen Abdeckungen mit streuender Wirkung erzeugten Abstrahlung.

Grundsätzlich können in Leuchtenkombinationen einzelne Abdeckungsteile auch mit separaten Diffusoren ausgebildet sein, um die diversen gewünschten optischen Wirkungen der einem Abdeckungsabschnitt zugeordneten einzelnen Leuchtenkomponenten in der Leuchtenkombination separat zu schalten.

Nach einer weiteren bevorzugten Ausführungsform der Erfindung bildet das mit der den Diffusor aufweisenden Abdeckung abgedeckte Leuchtengehäuse mit der mindestens einen, in dem Leuchtengehäuse angeordneten lichttechnischen Komponente eine Innenleuchte, deren Abstrahlung zwischen einer flächigen Innenbeleuchtung, bei auf diffus durchleuchtend geschaltetem Diffusor und einem gerichteten Leselicht, bei auf transparent geschaltetem Diffusor, umschaltbar ist.

Mit der Diffusor - Abdeckung lässt sich eine kostengünstige Innenleuchte realisieren, die wahlweise zur Raumbeleuchtung vorzugsweise in einem Fahrzeuginneren oder als Leselicht durch Abstrahlung eines gerichteten Lichtkegels verwendbar ist. In ausgeschaltetem Zustand dient der Diffusor als Einblickschutz. Dadurch wirkt die Innenleuchte flachbauend und passt sich harmonisch in eine angrenzende Innenverkleidung des Fahrzeugs ein.

Gemäß einer weiteren bevorzugten Ausführungsform der Erfindung ist die Lichtquelle als eine Glühlampe oder als eine Gasentladungslampe oder als eine LED ausgebildet, und ist die lichttechnische Komponente als die mindestens eine Lichtquelle oder als eine applikationsangepasste Kombination der mindestens einen Lichtquelle mindestens mit einem Reflektor ausgebildet.

Die lichttechnischen Komponenten der Leuchte können je nach Anwendung ausgelegt sein. Dabei sind verschiedenen Kombinationen von Lichtquelle und Reflektoren sowie mit weiteren optisch wirksamen Elementen möglich. Leuchtdioden, kurz LEDs, sind wegen ihres geringen Raumbedarfs und ihrer niedrigen Wärmeabstrahlung besonders für die Kombination mit dem Diffusor für Innen-, Signal- und Heckleuchten geeignet.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind. In den Zeichnungen zeigen:
Figur 1: Eine schematische Darstellung einer Leuchte zur Verwendung als Innenleuchte,
   a) als Leselicht in einer Seitenansicht im Schnitt,
   b) als das Leselicht in einer Draufsicht,
   c) als ein Innenraumlicht in einer Seitenansicht im Schnitt
   d) als das Innenraumlicht in einer Draufsicht,
Figur 2: eine schematisch vereinfachte Darstellung der Leuchte zur Verwendung als Scheinwerfer oder Heckleuchte,
   a) als ein Bremslicht / Fernlicht in einer Seitenansicht im Schnitt,
   b) als das Bremslicht / Fernlicht in einer Draufsicht,
   c) als ein Schlusslicht / Tagfahrlicht in einer Seitenansicht im Schnitt
   d) als das Schlusslicht in einer Draufsicht und
Figur 3: eine schematische Darstellung des Funktionsprinzips eines elektrischen Diffusors,
   a) bei einer angelegten elektrischen Spannung,
   b) in spannungslosem Zustand.

Eine Leuchte für Kraftfahrzeuge besteht im Wesentlichen aus einer Lichtquelle 2, 2' die in einem Leuchtengehäuse 6, 6' angeordnet ist, bei der das Leuchtengehäuse 6, 6' mit einer Abdeckung 19 abgedeckt ist, die einen elektrischen Diffusor 1 aufweist.

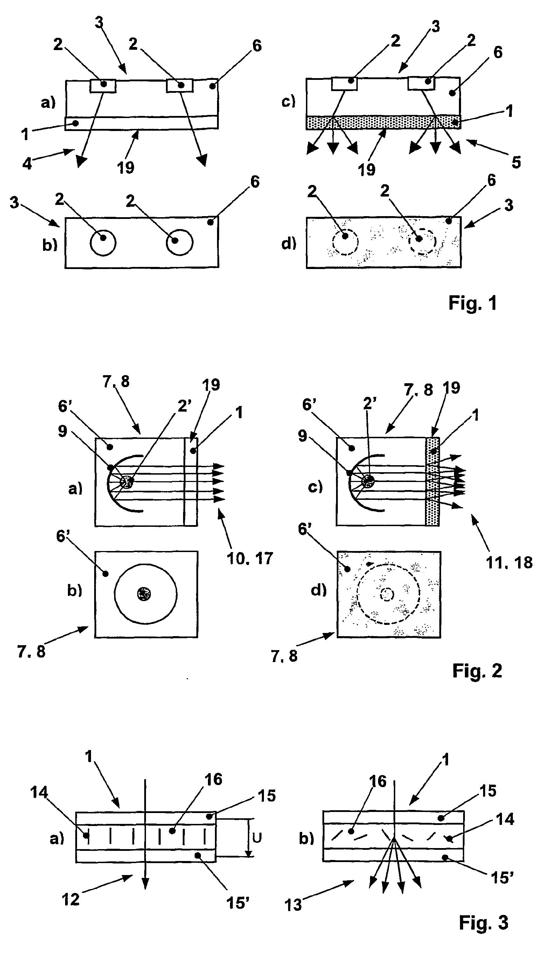

Der Diffusor 1 ist in an sich bekannter Weise ausgeführt (Fig. 3). Eine Flüssigkristallschicht 16 ist zwischen zwei flächigen transparenten Elektroden 15, 15' angeordnet. Eine der beiden Elektroden 15, 15' dient als ein Träger. Durch Anlegen einer Spannung U richten sich die in spannungslosem Zustand ungeordnet verteilten Flüssigkristalle 14 entlang des Feldvektor aus. Trifft eine optische Strahlung auf eine Elektrodenfläche, so wird sie in spannungslosen Zustand an den ungeordneten Flüssigkristallen 14 gestreut, so dass sich für die aus dem Diffusor 1 austretende Strahlung eine diffuse Lichtverteilung 13 ergibt. Bei angelegter Spannung U kann die einfallende Strahlung hingegen nahezu ungehindert die Flüssigkristallschicht 14 passieren, so dass die austretende Strahlung unverändert ist, d.h. im Falle eines einfallenden gerichteten Strahlenbündels bleibt eine ausgerichtete Lichtverteilung 12 erhalten. Durch geeignete Wahl der Spannung U lassen sich Zwischenstufen zwischen vollkommen diffuser und vollkommen transparenter optischer Wirkung des Diffusor 1 einstellen.

In Fig. 1 ist in vereinfachter Darstellung eine Innenleuchte 3 für Fahrzeuge gezeigt. Der Diffusor 1 ist vorteilhaft mit der Abdeckung 19 verbunden und deckt das Leuchtengehäuse 6 ab. In dem Gehäuse 6 sind zwei Lichtquellen 2, vorteilhaft als Leuchtdioden (LEDs) ausgebildet. In der linken Bildhälfte Fig. 1a) ist der Diffusor 1 transparent geschaltet, so dass die Abstrahlung unverändert austritt und eine Applikation als gerichtetes Leselicht 4 erfüllt. In der Draufsicht Fig. 1b) ist die Leuchte 3 mit den Lichtquellen 2 einsehbar. In der rechten Bildhälfte Fig. 1c) ist der Diffusor 1 hingegen diffus durchleuchtend geschaltet, so dass sich eine diffuse Lichtverteilung als flächiges Innenlicht 5 zur Innenraumbeleuchtung des Fahrzeugs ergibt. In der Draufsicht Fig. 1d) sieht ein Betrachter in diesem Fall eine diffus leuchtende Fläche. Die Innenleuchte 3 kann somit zwei Funktionen, nämlich die als das Leselicht 4 und die als die Innenraumbeleuchtung 5 erfüllen, ohne dass für beide Funktionen jeweils eigene separate lichttechnischen Komponenten im Leuchteninneren erforderlich sind. Sind die Lichtquellen 2 ausgeschaltet, befindet sich der Diffusor 1 vorteilhaft in spannungslosem Zustand. Die Abdeckung 19 ist dann für den Betrachter und urchsichtig, er sieht lediglich eine milchig diffuse Scheibe.

Eine weitere bevorzugte Ausführungsform ist in Fig. 2 gezeigt. Die vereinfachte Darstellung gilt für einen Scheinwerfer 7, ist aber analog auf eine Signalleuchte 8, und hier insbesondere auf eine Heckleuchte, ebenso anwendbar. In dem Leuchtengehäuse 6' befindet sich die Lichtquelle 2', vorteilhaft als eine Glühlampe ausgebildet, im Brennpunkt eines Reflektors 9. In der Darstellung Fig. 2a) ist der Diffusor 1 analog zu dem Ausführungsbeispiel in Fig. 1 spannungsbeaufschlagt, d.h. transparent, geschaltet. Die gerichtete Abstrahlung der aus der Glühlampe 2' und dem Reflektor 9 gebildeten lichttechnischen Komponente ist im Falle des Scheinwerfers 7 als ein Fernlicht 10 und im Falle der Heckleuchte 8 als ein Bremslicht 17 anwendbar. In der Draufsicht Fig. 2b) ist (prinzipiell) ein Einblick in das Leuchteninnere möglich. Hingegen ist in Fig. 2c) der Diffusor 1 wiederum auf diffus durchleuchtend eingestellt, was sich in Fig. 2d) als diffus leuchtende Scheinwerferfläche zeigt. Entsprechend ergibt sich eine diffus verteilte Abstrahlung, die als ein Tagfahrlicht 11 des Scheinwerfers 7, bzw. als ein Schlusslicht 18 der Heckleuchte 8 anwendbar ist. Die Leuchte kann als der Scheinwerfer 7 oder als die Heckleuchte 8 analog zu der Innenleuchte 3 jeweils zwei Funktionen unter Einsparung von lichttechnischen Komponenten erfüllen und weist einen Einblickschutz auf.

### Bezugszeichenliste

- 1: Elektrischer Diffusor
- 2,2': Lichtquelle
- 3: Innenleuchte
- 4: Leselicht
- 5: Innenlicht
- 6, 6': Leuchtengehäuse
- 7: Scheinwerfer
- 8: Signalleuchte
- 9: Reflektor
- 10: Fernlicht
- 11: Tagfahrlicht
- 12: gerichtete Abstrahlung
- 13: diffuse Abstrahlung
- 14: Flüssigkristalle
- 15, 15': Elektrode
- 16: Flüssigkristallschicht
- 17: Bremslicht
- 18: Schlusslicht
- 19: Abdeckung

## Patentansprüche

1. Leuchte, insbesondere für Kraftfahrzeuge,
mit mindestens einer Lichtquelle und einer in Abstrahlrichtung vorgelagerten Abdeckung, wobei die Abdeckung (19) zur Erzeugung einer Mehrfachfunktionalität einen in seiner optischen Wirkung veränderbaren, elektrischen Diffusor (1) aufweist,
wobei der Diffusor (1) in einem ersten Funktionszustand, in dem er opak geschaltet ist, einen Blickschutz bildet, durch den ein Einblick in Richtung der Lichtquelle (2, 2') verhindert wird,
mit einem Leuchtengehäuse (6'), das mit mindestens einer in dem Leuchtengehäuse (6') angeordneten lichttechnischen Komponente eine Signalleuchte (8) bildet, wobei das Leuchtengehäuse (6') mit der den Diffusor (1) aufweisenden Abdeckung (19) abgedeckt ist, **dadurch gekennzeichnet dass** die Signalleuchte (8) als eine Heckleuchte ausgebildet ist, bei der der Diffusor (1) bei eingeschaltetem Schlusslicht (18) auf diffus durchleuchtend geschaltet ist, und bei der sich der Diffusor (1) bei ausgeschaltetem Schlusslicht (18) in seinem ersten Funktionszustand befindet, und bei der der Diffusor (1) bei einer Bremsbetätigung, bei der ein Bremslicht (17) abgestrahlt wird, auf transparent geschaltet wird.

2. Leuchte nach Anspruch 1, **dadurch gekennzeichnet, dass** der Diffusor (1) in einem zweiten Funktionszustand, in dem er bei eingeschalteter Lichtquelle (2, 2') zwischen diffus durchleuchtend und transparent veränderbar einstellbar ist, als eine Vorrichtung zur Erzeugung einer applikationsangepassten Lichtverteilung ausgebildet ist.

3. Leuchte nach einem der Ansprüche 1 oder 2, **dadurch gekennzeichnet, dass** die Lichtquelle (2, 2') als eine Glühlampe oder als eine Gasentladungslampe oder als eine LED ausgebildet ist, und dass die lichttechnische Komponente als die mindestens eine Lichtquelle (2, 2') oder als eine applikationsangepasste Kombination der mindestens einen Lichtquelle (2, 2') mindestens mit einem Reflektor (9) ausgebildet ist.

## Claims

1. A lamp, especially for motor vehicles, comprising at least one light source and a cover mounted in front in the radiation direction, wherein the cover (19) has an electric diffuser (1) which can be changed with regard to its optical effect to generate a multiple functionality, wherein the diffuser (1) forms a viewing guard in a first functional state, in which it is switched to opaque, by means of which viewing inside in the direction of the light source (2, 2') is prevented, comprising a lamp housing (6'), which, together with at least one lighting component arranged in the lamp housing (6') forms a signal lamp (8), wherein the lamp housing (6') is covered with the cover (19) having the diffuser (1), **characterised in that** the signal lamp (8) is configured as a rear lamp, in which the diffuser (1) is switched to shining through diffusely when the tail light (18) is switched on, and in which the diffuser (1) is in its first functional state when the tail light (18) is switched off, and in which the diffuser (1), in the event of a brake operation, in which a brake light (17) is emitted, is switched to transparent.

2. A lamp according to claim 1, **characterised in that** the diffuser (1), in a second functional state, in which it can be variably adjusted, with the light source (2, 2') switched on, between shining through diffusely and transparent, is configured as a device for generating light distribution adapted to the application.

3. A lamp according to either of claims 1 or 2, **characterised in that** the light source (2, 2') is configured as a filament lamp or as a gas discharge lamp or as an LED, and **in that** the lighting component is configured as the at least one light source (2, 2') or as a combination, adapted to the application, of the at least one light source (2, 2'), at least with one reflector (9).

## Revendications

1. Feu, notamment pour véhicules automobiles, comprenant au moins une source lumineuse et un couvercle prémonté dans la direction de rayonnement, le couvercle (19), présentant un diffuseur électrique (1) variable dans son effet optique, pour produire une multi-fonctionnalité,
le diffuseur (1), dans un premier état de fonctionnement étant commuté sur opaque, pour former une protection empêchant de regarder dans la direction de la source lumineuse (2, 2'),
un boîtier (6'), formant un feu de signalisation (8) avec au moins un composant optique disposé dans le boîtier (6') couvert par un couvercle (19) présentant le diffuseur (1),
**caractérisé en ce que**
le feu de signalisation (8) est un feu arrière,
le diffuseur (1), si le feu arrière (18) est allumé, est commuté sur translucide diffus,
le diffuseur (1), si le feu arrière (18) est éteint, se trouve dans son premier état de fonctionnement, et
le diffuseur (1), si on actionne le frein, ce qui provoque l'émission d'un feu de stop (17), est commuté sur transparent.

2. Feu selon la revendication 1,
**caractérisé en ce que**
le diffuseur (1), dans un deuxième état de fonctionnement ou, si la source lumineuse (2, 2') est allumée, étant réglable entre translucide diffus et transparent, est un dispositif pour la production d'une répartition de lumière adaptée à une application.

3. Feu selon une des revendications 1 ou 2,
**caractérisé en ce que**
la source lumineuse (2, 2') est soit une ampoule à incandescence, soit une ampoule à décharge gazeuse, soit une diode électroluminescente, et
le composant optique est au moins une source lumineuse (2, 2') ou une combinaison, adaptée à une application, d'au moins une source lumineuse (2, 2') avec au moins un réflecteur (9).
